# EUROPEAN PATENT APPLICATION

(11) **EP 4 819 162 A1**
(43) Date of publication of application: **07.10.2026**
(21) Application number: 24895956.1
(22) Date of filing: 25.09.2024
(51) Int. Cl.: G21C 17/108

(54) **FUEL ASSEMBLY LINE POWER DENSITY DETERMINATION METHOD AND APPARATUS, AND COMPUTER DEVICE**

(30) Priority: 29.11.2023 CN 202311614939
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: WANG, Weiru, Shenzhen, Guangdong 518031 (CN); HU, Yisong, Shenzhen, Guangdong 518031 (CN); MAO, Yulong, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); FENG, Yingjie, Shenzhen, Guangdong 518031 (CN); LI, Kejia, Shenzhen, Guangdong 518031 (CN); CHEN, Tianming, Shenzhen, Guangdong 518031 (CN); MENG, Shuqi, Shenzhen, Guangdong 518031 (CN); ZHANG, Wei, Shenzhen, Guangdong 518031 (CN)
(74) Representative: Thomas, Tomos Daniel
(86) International application number: PCT/CN2024/121150
(87) International publication number: WO 2025/112860

(57) **Abstract**

A method and apparatus for determining a linear power density of a fuel assembly, a computer device, a storage medium, and a computer program product are provided. A status signal of a neutron detector at a preset height in each thimble of a first thimble group corresponding to a to-be-measured fuel assembly is obtained. The to-be-measured fuel assembly is taken as a center. A plurality of thimble groups corresponding to the to-be-measured fuel assembly are arranged around the to-be-measured fuel assembly, and each of the thimble groups includes a plurality of thimbles. When the neutron detector at the preset height in each thimble of the first thimble group is determined to be in an abnormal state based on the respective status signals, a second thimble group corresponding to the to-be-measured fuel assembly is determined. At least one valid thimble is selected from the second thimble group as a target thimble. The linear power density of the to-be-measured fuel assembly is determined based on data detected by a neutron detector at the preset height in the target thimble.

## Description

### CROSS-REFERENCE TO RELATED APPLICATIONS

This application claims priority to Chinese Patent Application No. 2023116149392, filed on November 29, 2023, and entitled "METHOD AND APPARATUS FOR DETERMINING LINEAR POWER DENSITY OF FUEL ASSEMBLY, AND COMPUTER DEVICE", the entire content of which is incorporated herein by reference.

### TECHNICAL FIELD

The present application relates to the technical field of nuclear power, and in particular, to a method and apparatus for determining a linear power density of a fuel assembly, a computer device, a storage medium, and a computer program product.

### BACKGROUND

With the development of nuclear engineering, and in order to ensure safety of reactors, the distribution of power in a reactor along three spatial dimensions needs to be continuously monitored.

In the related art, common core power reconstruction includes thin-plate spline fitting, polynomial expansion, ordinary kriging, and the like. Taking the polynomial expansion as an example, measurement data in the reactor can be collected. Then, a geometric shape of the reactor is partitioned into a plurality of grids, and a three-dimensional power distribution of a reactor core is represented by a polynomial in each grid. According to a principle of polynomial expansion, an optimal polynomial coefficient is obtained through an optimization algorithm, the optimal polynomial coefficient is substituted into a preset polynomial function, and an estimation result of the power distribution of the reactor core is obtained.

However, when a neutron detector fails, the data of a certain grid of the polynomial expansion is missing or erroneous, reducing the continuity of the data and the accuracy of a linear power density of a fuel assembly.

### SUMMARY

Accordingly, it is necessary to provide a method, an apparatus, a computer device, a computer-readable storage medium, and a computer program product for determining a linear power density of a fuel assembly, which are capable of improving the accuracy of the linear power density, in view of the above technical problem.

In a first aspect, a method for determining a linear power density of a fuel assembly is provided. The method includes the following operations. A status signal of a neutron detector at a preset height in each thimble of a first thimble group corresponding to a to-be-measured fuel assembly is obtained, where by taking the to-be-measured fuel assembly as a center, a plurality of thimble groups corresponding to the to-be-measured fuel assembly are arranged around the to-be-measured fuel assembly, and each of the thimble groups includes a plurality of thimbles. When the neutron detector at the preset height in each thimble of the first thimble group is determined to be in an abnormal state based on the respective status signals, a second thimble group corresponding to the to-be-measured fuel assembly is determined, where a distance between each thimble of the second thimble group and the to-be-measured fuel assembly is greater than a distance between each thimble of the first thimble group and the to-be-measured fuel assembly. At least one valid thimble is selected from the second thimble group as a target thimble, where a neutron detector at the preset height in the valid thimble is in a normal state. The linear power density of the to-be-measured fuel assembly is determined based on data detected by the neutron detector at the preset height in the target thimble.

In a second aspect, an apparatus for determining a linear power density of a fuel assembly is further provided. The apparatus includes a signal obtainment module, a first selection module, a second selection module, and a linear power density determination module. The signal obtainment module is configured to obtain a status signal of a neutron detector at a preset height in each thimble of a first thimble group corresponding to a to-be-measured fuel assembly, where by taking the to-be-measured fuel assembly as a center, a plurality of thimble groups corresponding to the to-be-measured fuel assembly are arranged around the to-be-measured fuel assembly, and each of the thimble groups includes a plurality of thimbles. The first selection module is configured to determine, when the neutron detector at the preset height in each thimble of the first thimble group is determined to be in an abnormal state based on the respective status signals, a second thimble group corresponding to the to-be-measured fuel assembly, where a distance between each thimble of the second thimble group and the to-be-measured fuel assembly is greater than a distance between each thimble of the first thimble group and the to-be-measured fuel assembly. The second selection module is configured to select at least one valid thimble from the second thimble group as a target thimble, where a neutron detector at the preset height in the valid thimble is in a normal state. The linear power density determination module is configured to determine the linear power density of the to-be-measured fuel assembly based on data detected by the neutron detector at the preset height in the target thimble.

In some embodiments, the linear power density determination module is further configured to obtain, for each selected target thimble, an axial linear power determined for the target thimble at the preset height, based on data detected by the neutron detector at the preset height in the target thimble, and to determine the linear power density of the to-be-measured fuel assembly, based on each axial linear power determined for each selected target thimble at the preset height.

In some embodiments, the linear power density determination module is further configured to determine a weight corresponding to each selected target thimble, and to weight the axial linear power determined for each selected target thimble at the preset height, based on the weight corresponding to each selected target thimble, to obtain the linear power density of the to-be-measured fuel assembly.

In some embodiments, the linear power density determination module is further configured to determine, for each selected target thimble, the weight corresponding to the target thimble, based on a distance between the target thimble and the to-be-measured fuel assembly, where the distance between the target thimble and the to-be-measured fuel assembly is in a negative correlation with the weight corresponding to the target thimble.

In some embodiments, the linear power density determination module is further configured to, when the neutron detector at the preset height in at least one thimble of the first thimble group is determined to be in the normal state, based on the status signals, select at least one valid thimble of the first thimble group as a standard thimble, and to determine the linear power density of the to-be-measured fuel assembly based on an axial linear power determined for the standard thimble at the preset height.

In some embodiments, the linear power density determination module is further configured to, when a plurality of valid thimbles exist in the first thimble group, select a first number of valid thimbles of the plurality of valid thimbles in the first thimble group as standard thimbles, where the first number is less than or equal to a second number, the second number is the number of thimbles in a nearest thimble group corresponding to the to-be-measured fuel assembly, and a distance between each thimble of the nearest thimble group and the to-be-measured fuel assembly is less than a distance between each thimble of another thimble group corresponding to the to-be-measured fuel assembly and the to-be-measured fuel assembly.

In a third aspect, a computer device is further provided. The computer device includes a memory and a processor, the memory stores a computer program, and the processor implements the steps in the above method for determining a linear power density of a fuel assembly when executing the computer program.

In a fourth aspect, a computer-readable storage medium is further provided. The computer-readable storage medium stores a computer program thereon, and the computer program, when executed by a processor, implements the steps in the above method for determining a linear power density of a fuel assembly.

In a fifth aspect, a computer program product is further provided. The computer program product includes a computer program, and the computer program, when executed by a processor, implements the steps in the above method for determining a linear power density of a fuel assembly.

In the above method and apparatus for determining a linear power density of a fuel assembly, the computer device, the storage medium, and the computer program product, a status signal of a neutron detector at a preset height in each thimble of a first thimble group corresponding to a to-be-measured fuel assembly is obtained. By taking the to-be-measured fuel assembly as a center, a plurality of thimble groups corresponding to the to-be-measured fuel assembly are arranged around the to-be-measured fuel assembly, and each of the thimble groups includes a plurality of thimbles. When the neutron detector at the preset height in each thimble of the first thimble group is determined to be in an abnormal state based on the respective status signals, a second thimble group corresponding to the to-be-measured fuel assembly is determined. A distance between each thimble of the second thimble group and the to-be-measured fuel assembly is greater than a distance between each thimble of the first thimble group and the to-be-measured fuel assembly. At least one valid thimble is selected from the second thimble group as a target thimble. The linear power density of the to-be-measured fuel assembly is determined based on data detected by a neutron detector at the preset height in the target thimble. When neutron detectors closer to each fuel assembly are all abnormal, a calculation error of the linear power density of each fuel assembly can be reduced by using data obtained by neutron detectors farther from each fuel assembly, thereby improving the accuracy of the linear power density.

The above description is merely an overview of the technical solutions of the present application. To enable the technical means of the present application to be understood more clearly and to be implemented according to the content of the specification, and to make the above and other objectives, features, and advantages of the present application more comprehensively, specific embodiments of the present application are set forth in detail below.

### BRIEF DESCRIPTION OF DRAWINGS

By reading the detailed description of the following embodiments, various other advantages and benefits will become apparent to those of ordinary skill in the art. The accompanying drawings are merely used for the purpose of illustrating the embodiments, and are not to be construed as limiting the present application. Throughout the drawings, the same reference numerals denote the same components. In the drawings:
FIG. 1 is an application environment diagram of a method for determining a linear power density of a fuel assembly in an embodiment.
FIG. 2 is a schematic flowchart of the method for determining the linear power density of the fuel assembly in an embodiment.
FIG. 3 is a schematic flowchart of steps for determining the linear power density in an embodiment.
FIG. 4 is a schematic distribution diagram of a to-be-measured fuel assembly and thimbles in an embodiment.
FIG. 5 is a structural block diagram of an apparatus for determining a linear power density of a fuel assembly in an embodiment.
FIG. 6 is an internal structural diagram of a computer device in an embodiment.
FIG. 7 is an internal structural diagram of a computer device in another embodiment.

### DETAILED DESCRIPTION

The embodiments of the technical solutions of the present application will be described in detail below with reference to the accompanying drawings. The following embodiments are merely used to illustrate the technical solutions of the present application more clearly, and therefore are only examples, and are not intended to limit the scope of protection of the present application.

Unless otherwise defined, all technical and scientific terms used herein have the same meanings as commonly understood by those skilled in the technical field of the present application. The terms used herein are merely for the purpose of describing specific embodiments, and are not intended to limit the present application. The terms "include" and "have" and any variations thereof in the specification, the claims, and the above brief description of the drawings of the present application are intended to cover a non-exclusive inclusion.

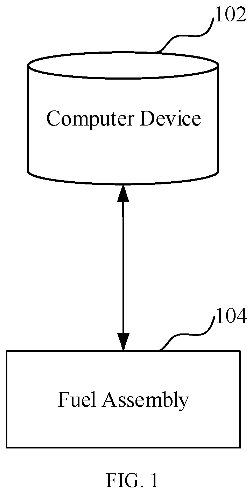

The method for determining a linear power density of a fuel assembly provided in the embodiments of the present application can be applied to an application environment shown in FIG. 1. A computer device 102 collects relevant information of a to-be-measured fuel assembly, and a data storage system can store data to be processed by the computer device 102. The data storage system can be integrated on the computer device 102, or can be placed on a cloud or another network server.

Specifically, the computer device 102 obtains a status signal of a neutron detector at a preset height in each thimble of a first thimble group corresponding to a to-be-measured fuel assembly 104. By taking the to-be-measured fuel assembly 104 as a center, a plurality of thimble groups are arranged around the to-be-measured fuel assembly, and each thimble group includes a plurality of thimbles corresponding to the thimble group. When the neutron detector at the preset height in each thimble of the first thimble group is determined to be in an abnormal state based on the respective status signals, the computer device 102 determines a second thimble group corresponding to the to-be-measured fuel assembly 104. A distance between each thimble of the second thimble group and the to-be-measured fuel assembly 104 is greater than a distance between each thimble of the first thimble group and the to-be-measured fuel assembly 104. The computer device 102 selects at least one valid thimble from the second thimble group as a target thimble. The computer device 102 can determine the linear power density of the to-be-measured fuel assembly 104 based on data detected by the neutron detector at the preset height in the target thimble.

The computer device 102 may be a terminal or a server. The terminal may be, but is not limited to, a measuring device, a personal computer, a laptop, a smartphone, a tablet computer, an Internet of Things device, or a portable wearable device. The Internet of Things device may be a smart speaker, a smart television, a smart air conditioner, a smart vehicle-mounted device, or the like. The portable wearable device may be a smart watch, a smart band, a head-mounted device, or the like. The server may be implemented by an independent server or a server cluster including a plurality of servers.

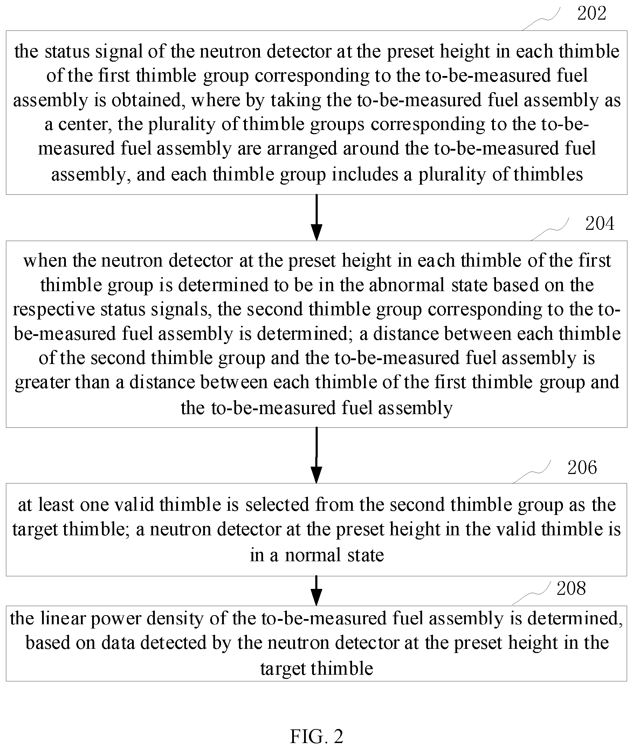

In an embodiment, as shown in FIG. 2, a method for determining a linear power density of a fuel assembly is provided. The method is described by an example in which the method is applied to the computer device 102 in FIG. 1. The method includes the following Step 202 to Step 208.

At Step 202, the status signal of the neutron detector at the preset height in each thimble of the first thimble group corresponding to the to-be-measured fuel assembly is obtained, where by taking the to-be-measured fuel assembly as a center, the plurality of thimble groups corresponding to the to-be-measured fuel assembly are arranged around the to-be-measured fuel assembly, and each thimble group includes a plurality of thimbles.

The fuel assembly is a structure for placing and storing nuclear fuel. The fuel assembly is a basic unit constituting a reactor core, and a plurality of fuel assemblies are arranged in the reactor core to form a specific geometric structure. The to-be-measured fuel assembly is a fuel assembly whose linear power density is to be determined. The reactor core is a central region of a reactor. The reactor further includes a reactor vessel, a coolant system, a control system, etc. The thimble is an in-core neutron flux thimble configured to measure and monitor neutron flux distribution in a nuclear reactor. The thimble group is a set including a plurality of thimbles around the to-be-measured fuel assembly. The status signal is a signal reflecting an operation state of the neutron detector. The term "a plurality of" means at least two. The neutron detector is a device for detecting existence and characteristics of neutrons, and includes various types such as a self-powered neutron detector (SPND).

The to-be-measured fuel assembly may have any one of various shapes, such as a columnar shape, a rod shape, a tubular shape, a plate shape, or a spherical shape, and the shape is not limited herein. A columnar fuel assembly is used in the embodiments of the present application. The reactor includes a plurality of fuel assemblies and a plurality of thimbles. The plurality of thimbles can be divided, with the fuel assembly whose linear power density is to be determined (i.e., the to-be-measured fuel assembly hereinafter) taken as a center, into a plurality of thimble groups corresponding to the fuel assembly. It should be noted that, in some embodiments, the reactor may include a plurality of categories of thimbles, and thimbles of the same category are connected to the same device, for example, connected to a cabinet. Among the plurality of thimble groups corresponding to the to-be-measured fuel assembly, at least two thimbles in the same thimble group belong to different categories, that is, the at least two thimbles in the same thimble group are connected to at least two different devices. When all the thimbles in the same thimble group are connected to the same device and the device is damaged, all detectors in the thimble group connected to the device fail. In this embodiment, since the at least two thimbles in the same thimble group belong to different categories, that is, the at least two thimbles in the same thimble group are connected to the at least two different devices, all neutron detectors in an entire thimble group can be prevented from failing due to a fault of a certain device.

For the plurality of thimble groups around the to-be-measured fuel assembly, a level of each thimble group can be determined based on a distance between the thimble group and the to-be-measured fuel assembly. The greater the distance, the higher the level. The distance between the thimble group and the to-be-measured fuel assembly refers to a distance between a thimble in the thimble group and the to-be-measured fuel assembly. In some embodiments, any one group can be arbitrarily selected from the plurality of thimble groups as the first thimble group corresponding to the to-be-measured fuel assembly. For example, a thimble group nearest to the to-be-measured fuel assembly is taken as the first thimble group. Each thimble group includes at least one thimble. In some embodiments, all thimbles in the same thimble group have the same distance to the to-be-measured fuel assembly.

For each thimble, a plurality of neutron detectors are arranged on the thimble, and a height of each neutron detector on the thimble is predetermined. The preset height may be any preset height. A neutron detector is arranged at the preset height in each thimble. For example, n different preset heights are preset, which are Z1, Z2, ..., and Zn, respectively, where Zi is the i-th preset height, and 1≤i≤n.

All the thimbles around each fuel assembly jointly provide a plurality of neutron detectors at each axial preset height. The neutron detector is configured to detect a neutron flux density at a axial preset height corresponding to the neutron detector. A structure of a detection head inside the neutron detector is configured to determine an operation state of the neutron detector itself.

The operation state of the neutron detector can be indicated by the status signal. The status signal belongs to two alternative cases, including a normal signal or an abnormal signal. When the status signal is the normal signal, it indicates that the neutron detector can operate normally. When the status signal is the abnormal signal, it indicates that the neutron detector cannot operate normally. The status signal of the neutron detector of a j-th thimble at an i-th preset height can be represented as s(aj, i), where aj refers to the j-th thimble in the thimble group, and i refers to the i-th preset height. When the status signal is a first preset value, it indicates that the neutron detector is normal. When the status signal is a second preset value, it indicates that the neutron detector is abnormal. The first preset value is different from the second preset value. For example, the first preset value is 1 and the second preset value is 0, or the first preset value is 0 and the second preset value is 1.

Specifically, in some embodiments, the state of the neutron detector can also be determined according to data detected by the neutron detector. For example, when the neutron detector detects abnormal data, for example, the data detected is 0, it can be considered that the neutron detector is in the abnormal state at this time.

In some embodiments, the computer device selects the first thimble group from thimble groups around the to-be-measured fuel assembly, and obtains, for each thimble of the first thimble group, the status signal of the neutron detector at the axial preset height.

At Step 204, when the neutron detector at the preset height in each thimble of the first thimble group is determined to be in the abnormal state based on the respective status signals, the second thimble group corresponding to the to-be-measured fuel assembly is determined; a distance between each thimble of the second thimble group and the to-be-measured fuel assembly is greater than a distance between each thimble of the first thimble group and the to-be-measured fuel assembly.

The second thimble group is one of the plurality of thimble groups around the to-be-measured fuel assembly, but is not the same as the first thimble group. A distance between each thimble of the second thimble group and the to-be-measured fuel assembly is greater than a distance between each thimble of the first thimble group and the to-be-measured fuel assembly. For example, in some embodiments, each thimble group around the to-be-measured fuel assembly may correspond to a level, the level is determined based on a distance between the thimble group and the to-be-measured fuel assembly, and the greater the distance, the higher the level. Therefore, the second thimble group needs to be determined from thimble groups whose levels are higher than the level of the first thimble group. For example, when the first thimble group corresponds to a level 1, and there are thimble groups of five levels in total around the to-be-measured fuel assembly, the second thimble group can be selected from thimble groups corresponding to levels 2 to 5.

Specifically, the computer device determines the operation state of the neutron detector through the structure of the detection head inside the neutron detector. When the structure of the detection head inside the neutron detector detects that the neutron detectors of all thimbles in the first thimble group are in the abnormal state at the axial preset height, the computer device can select the second thimble group. The computer device selects, from the thimble groups around the to-be-measured fuel assembly, another thimble group other than the first thimble group as the second thimble group. For example, it is assumed that the to-be-measured fuel assembly is numbered k and the preset height is Zi. When the status signals of the neutron detectors of all thimbles in the first thimble group at the axial preset height Zi are abnormal signals, the second thimble group is selected around the to-be-measured fuel assembly k. Each thimble of the second thimble group selected by the computer device has the same distance to the to-be-measured fuel assembly, and the distance from each thimble of the second thimble group to the to-be-measured fuel assembly is greater than the distance from each thimble of the first thimble group to the to-be-measured fuel assembly.

Further, in some embodiments, the second thimble group may be a valid thimble group nearest to the first thimble group among valid thimble groups around the to-be-measured fuel assembly. A valid thimble group refers to a thimble group in which at least one valid thimble exists.

When a neutron detector at the preset height in a certain thimble is in the normal state, the thimble can be regarded as a valid thimble. Similarly, when at least one valid thimble exists in a certain thimble group, that is, a neutron detector at the preset height in at least one thimble is in the normal state, the thimble group can be regarded as a valid thimble group. When the neutron detector at the preset height in each thimble of the first thimble group is in the abnormal state, that is, no valid thimble exists in the first thimble group, the first thimble group is not a valid thimble group. In this case, the second thimble group may be a valid thimble group nearest to the first thimble group among valid thimble groups around the to-be-measured fuel assembly.

Specifically, in some embodiments, when the neutron detector at the preset height in each thimble of the first thimble group is in the abnormal state, all thimble groups whose distances to the to-be-measured fuel assembly are greater than the distance between the first thimble group and the to-be-measured fuel assembly can be first selected. Then, the thimble group nearest to the first thimble group is selected from the selected thimble groups, and whether the selected thimble group is a valid thimble group is determined. If the selected thimble group is a valid thimble group, the thimble group is taken as the second thimble group. Otherwise, a thimble group second nearest to the first thimble group is then selected from the selected thimble groups, and the above determining step is repeated.

For example, in some embodiments, each thimble group around the to-be-measured fuel assembly may correspond to a level, the level is determined based on a distance between the thimble group and the to-be-measured fuel assembly, and the greater the distance, the higher the level. In this case, the second thimble group can be determined from thimble groups other than the first thimble group in order of the levels from low to high. Specifically, the second thimble group can be determined by iteration. The level corresponding to the first thimble group is determined as an initial level, and a level adjacent to and higher than the initial level is determined as a candidate level. For example, when the level of the first thimble group is 1, the candidate level is 2. A thimble group corresponding to the candidate level is derived to obtain a candidate thimble group. When a neutron detector at the preset height in each thimble of the candidate thimble group is in the abnormal state, that is, the candidate thimble group can be considered not to be a valid thimble group, a level adjacent to and higher than the candidate level is determined as a candidate level of the next round, and the step of obtaining the thimble group corresponding to the candidate level to obtain the candidate thimble group is returned to, to find a new candidate thimble group. When a thimble in which a neutron detector at the preset height is in the normal state exists in the candidate thimble group, that is, the candidate thimble group can be considered to be a valid thimble group. The candidate thimble group is determined as the second thimble group.

It can be readily understood that, in some embodiments, all valid thimble groups whose distances to the to-be-measured fuel assembly are greater than the distance between the first thimble group and the to-be-measured fuel assembly may be first selected, and then a valid thimble group nearest to the first thimble group is selected therefrom as the second thimble group, which is not limited herein.

In this embodiment, since the second thimble group is a valid thimble group nearest to the first thimble group, an error caused by an increase in a distance between a thimble group and a fuel assembly can be reduced, thereby improving the accuracy of the linear power density.

At Step 206, at least one valid thimble is selected from the second thimble group as the target thimble; a neutron detector at the preset height in the valid thimble is in a normal state.

A neutron detector at the preset height in a valid thimble is in the normal state, and a valid thimble appearing hereinafter is also interpreted in such a way, and details are not repeated here. The target thimble belongs to the second thimble group, and a neutron detector at the preset height in the target thimble is in the normal state.

Specifically, the computer device selects at least one valid thimble from the second thimble group as the target thimble. For example, the computer device can select a valid thimble from the second thimble group as the target thimble. Alternatively, the computer device can select all valid thimbles from the second thimble group as target thimbles.

It should be noted that, in some embodiments, to obtain a more accurate linear power density of the to-be-measured fuel assembly, a calculation needs to be performed based on data detected by a preset number of neutron detectors. When, in the second thimble group, a number of neutron detectors that are in the normal state at the preset height in respective thimbles is greater than the preset number, that is, a number of valid thimbles in the second thimble group is greater than the preset number, the preset number of valid thimbles are selected from the second thimble group as the target thimble. When, in the second thimble group, a number of neutron detectors that are in the normal state at the preset height in respective thimbles is less than the preset number, that is, a number of valid thimbles in the second thimble group is less than the preset number, all valid thimbles in the second thimble group can be taken as the target thimbles.

At Step 208, the linear power density of the to-be-measured fuel assembly is determined, based on data detected by the neutron detector at the preset height in the target thimble.

The linear power density is the power output by the to-be-measured fuel assembly per unit length. The data detected by the neutron detector includes a neutron intensity, a neutron flux density, a neutron energy spectrum, etc.

Specifically, the computer device performs analysis and calculation based on the data detected by the neutron detector at the preset height in the target thimble selected from the second thimble group, to obtain the linear power density of the to-be-measured fuel assembly.

In some embodiments, the neutron detector can detect a neutron flux density at the preset height, the computer device can calculate an axial linear power of the thimble at the axial preset height based on the neutron flux density, and calculate the linear power density of the to-be-measured fuel assembly based on respective axial linear powers.

In the above method for determining a linear power density of a fuel assembly, the status signal of the neutron detector at the preset height in each thimble of the first thimble group corresponding to the to-be-measured fuel assembly is obtained. By taking the to-be-measured fuel assembly as a center, the plurality of thimble groups corresponding to the to-be-measured fuel assembly are arranged around the to-be-measured fuel assembly, and each thimble group includes a plurality of thimbles. When the neutron detector at the preset height in each thimble of the first thimble group is determined to be in an abnormal state based on the respective status signals, the second thimble group corresponding to the to-be-measured fuel assembly is determined. A distance between each thimble of the second thimble group and the to-be-measured fuel assembly is greater than a distance between each thimble of the first thimble group and the to-be-measured fuel assembly. At least one valid thimble is selected from the second thimble group as the target thimble. The linear power density of the to-be-measured fuel assembly is determined based on the data detected by the neutron detector at the preset height in the target thimble. When neutron detectors closer to each fuel assembly are all in the abnormal state, a calculation error of the linear power density of each fuel assembly can be reduced based on the data obtained by neutron detectors farther from each fuel assembly, thereby improving the accuracy of the linear power density.

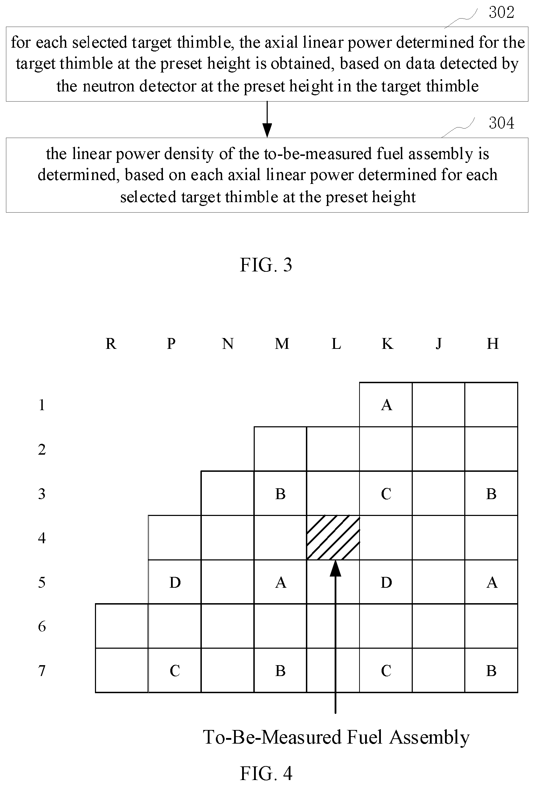

In an embodiment, as shown in FIG. 3, Step 208 includes steps 302 to 304.

At Step 302, for each selected target thimble, the axial linear power determined for the target thimble at the preset height is obtained, based on data detected by the neutron detector at the preset height in the target thimble.

The axial linear power is transmitted by the thimble along a preset axial direction at the preset height.

Specifically, the computer device calculates, based on the detected data, the axial linear power of the target thimble selected from the second thimble group at the preset height. The detected data is from the neutron detector arranged at the preset height in the target thimble selected from the second thimble group.

In some embodiments, the neutron detector can detect a neutron flux density of the target thimble at the preset height, and a current corresponding to the target thimble at the preset height is obtained, based on a correlation between the neutron flux density and corresponding current data. The axial linear power of the target thimble at the preset height can be calculated, based on a positive correlation between the current corresponding to the target thimble at the preset height and the axial linear power of the target thimble at the preset height.

At Step 304, the linear power density of the to-be-measured fuel assembly is determined, based on each axial linear power determined for each selected target thimble at the preset height.

The axial linear power is in a one-to-one correspondence with the target thimble, and the axial linear power is also in a one-to-one correspondence with different heights of the target thimble in a preset axial direction.

Specifically, based on the calculated axial linear power of the target thimble selected from the second thimble group at the preset height, the computer device analyzes and calculates these axial linear powers, to obtain the linear power density of the to-be-measured fuel assembly corresponding to the target thimble.

In this embodiment, the linear power density of the to-be-measured fuel assembly can be calculated based on the data detected by the neutron detector, thereby improving the accuracy of the linear power density of the to-be-measured fuel assembly.

In some embodiments, determining the linear power density of the to-be-measured fuel assembly based on each axial linear power determined for each selected target thimble at the preset height includes determining a weight corresponding to each selected target thimble; and weighting each axial linear power determined for each selected target thimble at the preset height, based on the weight corresponding to each selected target thimble, to obtain the linear power density of the to-be-measured fuel assembly.

Specifically, the computer device determines a weight occupied by each thimble around the to-be-measured fuel assembly. Based on respective weights corresponding to different thimbles, the computer device performs a weighting calculation on axial linear powers obtained respectively for the target thimbles selected from the second thimble group at the preset height, so that the linear power density of the to-be-measured fuel assembly can be obtained.

In some embodiments, a plurality of thimble groups exist around the to-be-measured fuel assembly, all thimbles in each thimble group have the same weight, and weights of thimbles in different thimble groups are different.

In this embodiment, by determining the weight corresponding to the target thimble, the axial linear power of the target thimble can be calculated, based on the determined weights of the target thimbles, so that the linear power density of the to-be-measured fuel assembly is more accurate.

In some embodiments, determining the weight corresponding to each selected target thimble includes determining, for each selected target thimble, the weight corresponding to the target thimble, based on a distance between the target thimble and the to-be-measured fuel assembly, where the distance between the target thimble and the to-be-measured fuel assembly is in a negative correlation with the weight corresponding to the target thimble.

Specifically, the computer device measures a distance between each target thimble and the to-be-measured fuel assembly, and based on a negative correlation between the distance between the target thimble and the to-be-measured fuel assembly and the weight corresponding to the target thimble, the weight corresponding to each target thimble can be obtained.

In this embodiment, by measuring the distance between the target thimble and the to-be-measured fuel assembly, the weight corresponding to each target thimble can be obtained, so that a calculation result of the linear power density of the to-be-measured fuel assembly is more accurate.

In some embodiments, the method for determining a linear power density of a fuel assembly further includes: when a neutron detector at the preset height in at least one thimble of the first thimble group is determined to be in the normal state, based on respective status signals (where the respective status signals refer to the status signals, obtained above, of the neutron detector at the preset height in each thimble of the first thimble group), selecting at least one valid thimble from the first thimble group as a standard thimble; and determining the linear power density of the to-be-measured fuel assembly, based on the axial linear power determined for the standard thimble at the preset height.

The standard thimble belongs to the first thimble group, and a neutron detector at the preset height in the standard thimble is in the normal state.

Specifically, the computer device obtains the status signal of the neutron detector through the structure of the detection head inside the neutron detector, to determine the operation state of the neutron detector at the preset height in the first thimble group. When it is determined that, in the first thimble group, a neutron detector at the preset height in at least one thimble operates normally, a plurality of thimbles are selected from the first thimble group, axial linear powers corresponding to the selected plurality of thimbles at the preset height are calculated, respectively, and the linear power density of the to-be-measured fuel assembly at the preset height is determined, based on the axial linear powers corresponding to the selected thimbles. Among the plurality of thimbles selected from the first thimble group, a neutron detector at the preset height in at least one thimble operates normally.

In this embodiment, by determining the state of each thimble in the first thimble group, the linear power density of the to-be-measured fuel assembly can be obtained, based on data of the first thimble group, thereby improving the calculation efficiency of the linear power density of the to-be-measured fuel assembly.

In some embodiments, selecting at least one valid thimble from the first thimble group as a standard thimble includes when a plurality of valid thimbles exists in the first thimble group, selecting a first number of valid thimbles of the plurality of valid thimbles in the first thimble group as standard thimbles, where the first number is less than or equal to a second number. The second number is the number of thimbles in the nearest thimble group corresponding to the to-be-measured fuel assembly, and a distance between each thimble of the nearest thimble group and the to-be-measured fuel assembly is less than a distance between each thimble of another thimble group corresponding to the to-be-measured fuel assembly and the to-be-measured fuel assembly.

The first number is the number of thimbles selected from the first thimble group for subsequent linear power density calculation. The second number is the number of thimbles in the nearest thimble group around the to-be-measured fuel assembly. The nearest thimble group is, among all thimble groups around the to-be-measured fuel assembly, a thimble group whose included thimbles have the smallest distances to the to-be-measured fuel assembly.

Specifically, when it is determined that, in the first thimble group, a neutron detector at the preset height in at least one thimble operates normally, the computer device selects the first number of thimbles from thimbles that operate normally in the first thimble group.

In some embodiments, it is assumed that there are six thimbles in the nearest thimble group in total, that is, the second number is 6. In this case, in a process of calculating the linear power density of the to-be-measured fuel assembly, 6 thimbles can be selected from the first thimble group, and calculation is performed by using the data of the 6 thimbles in the first thimble group. The number of all thimbles included in the first thimble group is greater than 6, and only 6 thimbles are selected from the first thimble group. Neutron detectors at the preset height in the 6 thimbles selected from the first thimble group do not necessarily all operate normally, that is, among the six thimbles selected from the first thimble group, the number of thimbles whose neutron detectors at the preset height can operate normally is the first number.

In this embodiment, by selecting the preset number of thimbles from the first thimble group, the linear power density can be calculated by using the data of the selected thimbles, thereby ensuring the accuracy of the calculation of the linear power density of the to-be-measured fuel assembly.

In some embodiments, as shown in FIG. 4, a schematic diagram of the to-be-measured fuel assembly and thimbles around the to-be-measured fuel assembly in a top view is partially shown. In this drawing, numerals 1 to 7 represent different rows respectively, letters R, P, N, M, L, K, J, and H represent different columns respectively, letters A, B, C, and D each represent one category of thimble respectively, and the same letter among the letters A, B, C, and D represents the same type of thimble. A shaded portion at row 4 and column L in this drawing represents the to-be-measured fuel assembly. A thimble A at row 3 and column M, a thimble B at row 3 and column K, a thimble C at row 5 and column M, and a thimble D at row 5 and column K constitute a first-level thimble group, and the first-level thimble group refers to a thimble group nearest to the to-be-measured fuel assembly. A thimble A at row 1 and column K, a thimble D at row 5 and column P, a thimble A at row 5 and column H, a thimble B at row 7 and column M, a thimble C at row 7 and column K, and a thimble B at row 3 and column H constitute a second-level thimble group, and the second-level thimble group refers to a thimble group nearest to the to-be-measured fuel assembly except the first-level thimble group. When at least one of the neutron detectors at the preset height of the thimbles A, B, C, and D in the first-level thimble group is in the normal state, the linear power density of the to-be-measured fuel assembly can be obtained through weighted averaging of the thimbles A, B, C, and D in the first-level thimble group by using a weighting coefficient method. When the neutron detectors at the preset height of the thimbles A, B, C, and D in the first-level thimble group are all in the abnormal state, it may be considered to obtain the linear power density through weighted averaging of the thimbles A, B, C, and D in the second-level thimble group by using a weighting coefficient method.

It is assumed that the to-be-measured fuel assembly is numbered k, there are m thimbles in the nearest ring around the to-be-measured fuel assembly, and the thimbles are numbered a1, a2, ..., and am, respectively. Each thimble in the nearest ring is provided with n neutron detectors along an axial height, and positions of the neutron detectors along the axial height are Z1, Z2, ..., and Zn, respectively. When the preset height is Zi, and the status signals of the neutron detectors of all thimbles in the nearest ring at the axial height Zi are abnormal signals, thimbles of the next outer ring are selected around the to-be-measured fuel assembly k, where the next outer ring includes r (r≥m) thimbles, and the thimbles are numbered b1, b2, ..., bm, ..., and br, respectively. A thimble bj (1≤j≤r) is selected from the second thimble group. It is assumed that a linear power density of the to-be-measured fuel assembly k at the axial height Zi is Pk(i), and an axial linear power reconstructed for the thimble bj at the height Zi is Pk(bj, i). ω(k, bj) represents a weight occupied by the thimble bj in a process of calculating the linear power density of the to-be-measured fuel assembly k, and a status signal of a neutron detector of the thimble bj at the axial height Zi (1≤i≤n) is defined as s(bj, i). Therefore, the linear power density of the to-be-measured fuel assembly k at the preset height Zi can be represented as: ${P}_{k} \left(i\right) = \frac{{\sum }_{j = 1}^{m} ω \left(k, bj\right) s \left(bj, i\right) {P}_{k} \left(bj, i\right)}{{\sum }_{j = 1}^{m} ω \left(k, bj\right) s \left(bj, i\right)}$

It should be understood that, although the steps in the flowcharts involved in the above embodiments are displayed in sequence as indicated by arrows, these steps are not necessarily performed in sequence in the order indicated by the arrows. Unless explicitly described herein, there is no strict order limitation on the execution of these steps, and these steps can be performed in other orders. Moreover, at least a part of the steps in the flowcharts involved in the above embodiments may include a plurality of steps or a plurality of stages. These steps or stages are not necessarily performed and completed at the same moment, but may be performed at different moments. The execution order of these steps or stages is also not necessarily performed in sequence, but may be performed in turn or alternately with at least a part of other steps or stages in some other steps.

Based on the same inventive concept, an embodiment of the present application further provides an apparatus for determining a linear power density of a fuel assembly for implementing the above method for determining a linear power density of a fuel assembly. An implementation of the apparatus solving the problem presented herein is similar to the implementation described in the above method. Therefore, for a specific definition of one or more embodiments of the apparatus for determining a linear power density of a fuel assembly provided below, reference may be made to the above definition of the method for determining a linear power density of a fuel assembly, and details are not repeated here.

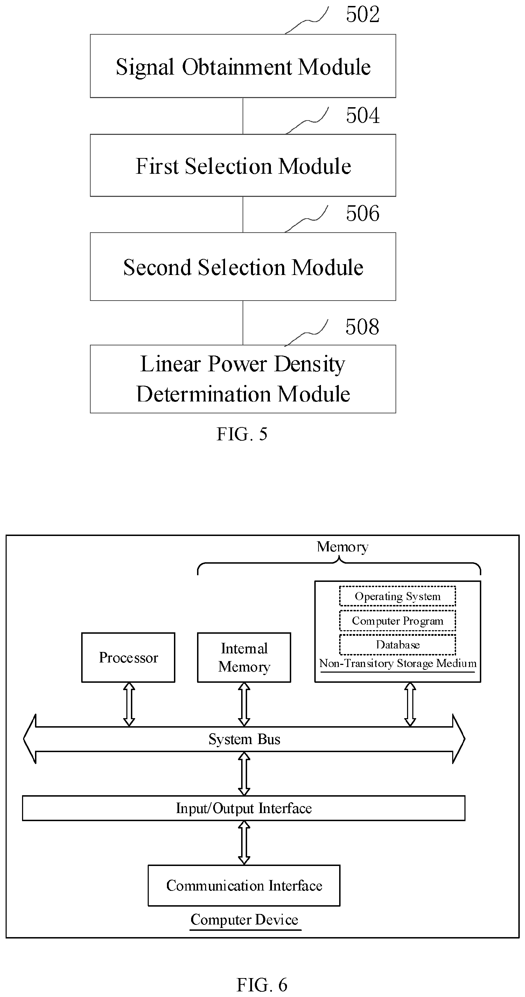

In an embodiment, as shown in FIG. 5, an apparatus for determining a linear power density of a fuel assembly is provided, including a signal obtainment module 502, a first selection module 504, a second selection module 506, and a linear power density determination module 508.

The signal obtainment module 502 is configured to obtain the status signal of the neutron detector at the preset height in each thimble of the first thimble group corresponding to the to-be-measured fuel assembly, where by taking the to-be-measured fuel assembly as a center, the plurality of thimble groups corresponding to the to-be-measured fuel assembly are arranged around the to-be-measured fuel assembly, and each thimble group includes a plurality of thimbles.

The first selection module 504 is configured to determine, when the neutron detector at the preset height in each thimble of the first thimble group is determined to be in the abnormal state based on the respective status signals, the second thimble group corresponding to the to-be-measured fuel assembly, where a distance between each thimble of the second thimble group and the to-be-measured fuel assembly is greater than a distance between each thimble of the first thimble group and the to-be-measured fuel assembly.

The second selection module 506 is configured to select at least one valid thimble from the second thimble group as the target thimble, where a neutron detector at the preset height in the valid thimble is in a normal state.

The linear power density determination module 508 is configured to determine the linear power density of the to-be-measured fuel assembly, based on data detected by the neutron detector at the preset height in the target thimble.

In some embodiments, the linear power density determination module is further configured to obtain, for each selected target thimble, the axial linear power determined for the target thimble at the preset height, based on data detected by the neutron detector at the preset height in the target thimble, and to determine the linear power density of the to-be-measured fuel assembly, based on each axial linear power determined for each selected target thimble at the preset height.

In some embodiments, the linear power density determination module is further configured to determine the weight corresponding to each selected target thimble, and to weight each axial linear power determined for each selected target thimble at the preset height, based on the weight corresponding to each selected target thimble, to obtain the linear power density of the to-be-measured fuel assembly.

In some embodiments, the linear power density determination module is further configured to determine, for each selected target thimble, the weight corresponding to the target thimble, based on a distance between the target thimble and the to-be-measured fuel assembly, where the distance between the target thimble and the to-be-measured fuel assembly is in a negative correlation with the weight corresponding to the target thimble.

In some embodiments, the apparatus further includes a linear power density determination module configured to: when a neutron detector at the preset height in at least one thimble of the first thimble group is determined to be in the normal state, based on respective status signals, select at least one valid thimble from the first thimble group as a standard thimble; and determine the linear power density of the to-be-measured fuel assembly, based on the axial linear power determined for the feature thimble at the preset height.

In some embodiments, the linear power density determination module is further configured to, when a plurality of valid thimbles exist in the first thimble group, select the first number of valid thimbles of the plurality of valid thimbles in the first thimble group as standard thimbles, where the first number is less than or equal to the second number, the second number is the number of thimbles in the nearest thimble group corresponding to the to-be-measured fuel assembly, and a distance between each thimble of the nearest thimble group and the to-be-measured fuel assembly is less than a distance between each thimble of another thimble group corresponding to the to-be-measured fuel assembly and the to-be-measured fuel assembly.

Each module in the above apparatus for determining a linear power density of a fuel assembly can be implemented entirely or partially by software, hardware, or a combination thereof. Each of the above modules can be embedded in or independent of a processor in a computer device in hardware, or can be stored in a memory in the computer device in software, so that the processor invokes and executes operations corresponding to each of the above modules.

In an embodiment, a computer device is provided. The computer device may be a server, and an internal structural diagram of the computer device can be as shown in FIG. 6. The computer device includes a processor, a memory, an input/output (I/O) interface, and a communication interface. The processor, the memory, and the input/output interface are connected by a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running the operating system and the computer program in the non-volatile storage medium. The database of the computer device is configured to store session data. The input/output interface of the computer device is configured to exchange information between the processor and an external device. The communication interface of the computer device is configured to communicate with an external terminal through a network connection. The computer program, when executed by the processor, implements the method for determining a linear power density of a fuel assembly.

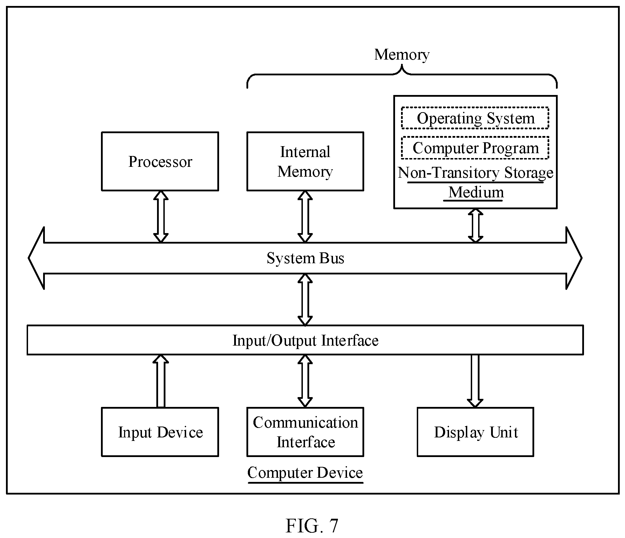

In an embodiment, a computer device is provided. The computer device may be a terminal, and an internal structural diagram of the computer device may be as shown in FIG. 7. The computer device includes a processor, a memory, an input/output interface, a communication interface, a display unit, and an input apparatus. The processor, the memory, and the input/output interface are connected by a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running the operating system and the computer program in the non-volatile storage medium. The input/output interface of the computer device is configured to exchange information between the processor and an external device. The communication interface of the computer device is configured to communicate with an external terminal in a wired or wireless manner, and the wireless manner can be implemented by WiFi, a mobile cellular network, NFC (near field communication), or another technology. The computer program, when executed by the processor, implements the method for determining a linear power density of a fuel assembly. The display unit of the computer device is configured to form a visually visible picture, and may be a display screen, a projection apparatus, or a virtual reality imaging apparatus. The display screen may be a liquid crystal display screen or an electronic ink display screen. The input apparatus of the computer device may be a touch layer covering the display screen, a button, a trackball, or a touchpad provided on a housing of the computer device, or may be an external keyboard, touchpad, mouse, or the like.

Those skilled in the art can understand that the structures shown in FIG. 6 and FIG. 7 are merely block diagrams of partial structures related to the solution of the present application, and do not constitute a limitation on the computer device to which the solution of the present application is applied. A specific computer device may include more or fewer components than those shown in these drawings, combine some components, or have a different component arrangement.

In an embodiment, a computer device is provided, including a memory and a processor. A computer program is stored in the memory, and the processor, when executing the computer program, implements the steps in the above method embodiments.

In an embodiment, a computer-readable storage medium is provided, and a computer program is stored thereon. The computer program, when executed by a processor, implements the steps in the above method embodiments.

In an embodiment, a computer program product is provided, including a computer program. The computer program, when executed by a processor, implements the steps in the above method embodiments.

Those of ordinary skill in the art can understand that all or part of the processes for implementing the methods in the above embodiments can be completed by instructing relevant hardware through a computer program. The computer program can be stored in a non-transitory computer-readable storage medium, and when executed, the computer program can include the processes of the above method embodiments. Any reference to a memory, a database, or another medium used in the embodiments provided in the present application may include at least one of a non-volatile memory or a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, etc. By way of illustration and not limitation, the RAM may be in various forms, such as a static random access memory (SRAM) or a dynamic random access memory (DRAM). The database involved in the embodiments provided in the present application may include at least one of a relational database and a non-relational database. The non-relational database may include a blockchain-based distributed database, etc., but is not limited thereto. The processor involved in the embodiments provided in the present application may be a general-purpose processor, a central processing unit, a graphics processing unit, a digital signal processor, a programmable logic device, a quantum-computing-based data processing logic device, etc., but is not limited thereto.

The technical features of the above embodiments can be combined arbitrarily. For brevity of description, not all possible combinations of the technical features in the above embodiments are described. However, as long as there is no contradiction in the combinations of these technical features, the combinations should be considered to fall within the scope described in this specification.

The above embodiments merely express several implementations of the present application, and the descriptions thereof are relatively specific and detailed, but should not be construed as a limitation on the scope of the present application. It should be noted that, for those of ordinary skill in the art, some modifications and improvements can be made without departing from the inventive concept of the present application, and these modifications and improvements all fall within the scope of protection of the present application. Therefore, the scope of protection of the present application shall be subject to the appended claims.

## Claims

1. A method for determining a linear power density of a fuel assembly, comprising:
obtaining a status signal of a neutron detector at a preset height in each thimble of a first thimble group corresponding to a to-be-measured fuel assembly, wherein by taking the to-be-measured fuel assembly as a center, a plurality of thimble groups corresponding to the to-be-measured fuel assembly are arranged around the to-be-measured fuel assembly, and each of the thimble groups comprises a plurality of thimbles;
determining, when the neutron detector at the preset height in each thimble of the first thimble group is determined to be in an abnormal state based on the respective status signals, a second thimble group corresponding to the to-be-measured fuel assembly, wherein a distance between each thimble of the second thimble group and the to-be-measured fuel assembly is greater than a distance between each thimble of the first thimble group and the to-be-measured fuel assembly;
selecting at least one valid thimble from the second thimble group as a target thimble, wherein a neutron detector at the preset height in the valid thimble is in a normal state; and
determining the linear power density of the to-be-measured fuel assembly based on data detected by the neutron detector at the preset height in the target thimble.

2. The method according to claim 1, wherein determining the linear power density of the to-be-measured fuel assembly based on the data detected by the neutron detector at the preset height in the target thimble comprises:
obtaining, for each selected target thimble, an axial linear power determined for the target thimble at the preset height based on data detected by the neutron detector at the preset height in the target thimble; and
determining the linear power density of the to-be-measured fuel assembly based on each axial linear power determined for each selected target thimble at the preset height.

3. The method according to claim 2, wherein determining the linear power density of the to-be-measured fuel assembly based on each axial linear power determined for each selected target thimble at the preset height comprises:
determining a weight corresponding to each selected target thimble; and
weighting the axial linear power determined for each selected target thimble at the preset height, based on the weight corresponding to each selected target thimble, to obtain the linear power density of the to-be-measured fuel assembly.

4. The method according to claim 3, wherein determining the weight corresponding to each selected target thimble comprises:
determining, for each selected target thimble, the weight corresponding to the target thimble, based on a distance between the target thimble and the to-be-measured fuel assembly;
wherein the distance between the target thimble and the to-be-measured fuel assembly is in a negative correlation with the weight corresponding to the target thimble.

5. The method according to claim 1, further comprising:
selecting, when the neutron detector at the preset height in at least one thimble of the first thimble group is determined to be in the normal state based on the status signals, the at least one valid thimble of the first thimble group as a standard thimble; and
determining the linear power density of the to-be-measured fuel assembly based on an axial linear power determined for the standard thimble at the preset height.

6. The method according to claim 5, wherein selecting the at least one valid thimble of the first thimble group as the standard thimble comprises:
selecting, when a plurality of valid thimbles exist in the first thimble group, a first number of valid thimbles of the plurality of valid thimbles in the first thimble group as the standard thimbles, wherein the first number is less than or equal to a second number, the second number is the number of thimbles in a nearest thimble group corresponding to the to-be-measured fuel assembly, and a distance between each thimble of the nearest thimble group and the to-be-measured fuel assembly is less than a distance between each thimble of another thimble group corresponding to the to-be-measured fuel assembly and the to-be-measured fuel assembly.

7. The method according to claim 1, wherein the second thimble group is, among valid thimble groups around the to-be-measured fuel assembly, a valid thimble group nearest to the first thimble group, and the valid thimble group is a thimble group in which at least one valid thimble exists.

8. An apparatus for determining a linear power density of a fuel assembly, comprising:
a signal obtainment module, configured to obtain a status signal of a neutron detector at a preset height in each thimble of a first thimble group corresponding to a to-be-measured fuel assembly, wherein by taking the to-be-measured fuel assembly as a center, a plurality of thimble groups corresponding to the to-be-measured fuel assembly are arranged around the to-be-measured fuel assembly, and each of the thimble groups comprises a plurality of thimbles;
a first selection module, configured to determine, when the neutron detector at the preset height in each thimble of the first thimble group is determined to be in an abnormal state based on the respective status signals, a second thimble group corresponding to the to-be-measured fuel assembly, wherein a distance between each thimble of the second thimble group and the to-be-measured fuel assembly is greater than a distance between each thimble of the first thimble group and the to-be-measured fuel assembly;
a second selection module, configured to select at least one valid thimble from the second thimble group as a target thimble, wherein a neutron detector at the preset height in the valid thimble is in a normal state; and
a linear power density determination module, configured to determine the linear power density of the to-be-measured fuel assembly based on data detected by the neutron detector at the preset height in the target thimble.

9. A computer device, comprising a memory and a processor, the memory storing a computer program, wherein the processor, when executing the computer program, implements the steps of the method according to any one of claims 1 to 7.

10. A computer-readable storage medium, having a computer program stored thereon, wherein the computer program, when executed by a processor, implements the steps of the method according to any one of claims 1 to 7.

11. A computer program product, comprising a computer program, wherein the computer program, when executed by a processor, implements the steps of the method according to any one of claims 1 to 7.
